# EUROPEAN PATENT SPECIFICATION

(11) **EP 1 784 438 B1**
(45) Date of publication and mention of the grant of the patent: **20.02.2008**
(21) Application number: 05757951.8
(22) Date of filing: 07.07.2005
(51) Int. Cl.: C08F 291/02, C08F 279/02, C09D 4/06

(54) **PRIMERLESS HTV-SILICONE RUBBER**
GRUNDIERUNGSFREIER HTV-SILIKONKAUTSCHUK
CAOUTCHOUC EN SILICONE -HTV SANS PRIMAIRE

(30) Priority: 23.07.2004 US 898609
(43) Date of publication of application: 16.05.2007
(73) Proprietor: Wacker Chemie AG, 81737 München (DE)
(72) Inventor: VICK, Toby, R., Toledo, OH 46323 (US); RAGAN, Sharon, Morenci, MI 49256 (US)
(74) Representative: Fritz, Helmut
(86) International application number: PCT/EP2005/007363
(87) International publication number: WO 2006/007986

(56) References cited:
- EP-A- 0 248 271
- GB-A- 831 490
- US-A- 5 874 504
- US-A- 5 998 506

## Description

In at least one aspect, the present invention provides a curable elastomeric composition that adheres to an article when cured without pretreatment of the article with a primer.

Various applications require the production of over-molded parts in which a substrate is coated with a rubber or plastic coating. The substrate in such applications may be any material that is compatible with the rubber or plastic coating. Typically, the substrate will be from metals, plastic, or fiberglass. Among the numerous parts made in a wide range endeavors that utilize over-molded parts are various automobile passenger compartment components and insulators used in high voltage transmission lines. The manufacture of over-molded parts usually requires the treatment of the substrate with a primer in order to improve adhesion of the rubber or plastic to the substrate.

The manufacture of insulators used to suspend high voltage transmission lines from transmission pylons is a particularly important application requiring rather demanding performance criteria. For example, such insulators must be extremely insulating so that a path to ground is not created.
Moreover, these insulators must resist UV radiation, thermal extremes, pollution and vandalism. Typically non-ceramic transmission line insulators and non-ceramic distribution line insulators will be made by injection molding a rubber over a fiberglass rod. The over-molded portion of such insulators will typically be formed into a series of fins called sheds that protrude axially from the fiberglass rod.

The function of these sheds is to increase the linear distance over the surface of the insulator from the energy source to ground. The increased linear distance due to the sheds on the insulator allows the overall insulator to be shorter for more controlled support of the high voltage line and aids more compact design and reliable performance of transmission pylons. End fittings to effect connection to the transmission pylon and line may be added prior to or after the rubber is over-molded onto the fiberglass rod. Although the injection molding of such insulators works reasonably well, it is common practice to treat the fiberglass rod with a primer prior to over-molding to improve adhesion of the rubber to the fiberglass rod. This extra step of pretreatment with a primer adds cost to the process that would not be incurred if such a step could be eliminated.
Accordingly, there exists a need in the prior art for improved compositions and methods for forming over-molded parts that do not require a primer pretreatment step.

The present invention overcomes one or more problems of the prior art by providing in at least one embodiment a curable elastomeric composition which is capable of being applied to the surface of an article without treatment of the surface with a primer. The curable elastomeric composition of this embodiment comprises a curable elastomer, a metal salt of an ethylenically unsaturated carboxylic acid, a trifunctional acrylate, and an organic peroxide. The composition of this embodiment is particularly well suited for over-molding an article without the need for pretreatment with a primer.

In another embodiment of the invention, a curable elastomeric composition comprising a curable silicone elastomer, a metal salt of an ethylenically unsaturated carboxylic acid, a trimethylolpropane triacrylate, and an organic peroxide. The curable elastomeric composition of this embodiment is particularly useful for forming insulators used in transmission lines without the need to treat the fiberglass rod with a primer.

Reference will now be made in detail to presently preferred compositions or embodiments and methods of the invention, which constitute the best modes of practicing the invention presently known to the inventors.

In an embodiment of the present invention, a curable elastomeric composition is provided. The curable elastomeric composition of this embodiment comprises a curable elastomer, a metal salt of an ethylenically unsaturated carboxylic acid, a trifunctional acrylate, and an organic organic peroxide. The composition of this embodiment is particularly well suited for over-molding an article without the need for pretreatment with a primer.

The curable elastomer used in this embodiment is any type of elastomer that is compatible with the other components of the curable elastomeric composition. Examples include an elastomer selected from the group consisting of synthetic silicone elastomers, polyisoprene, styrenebutadiene rubbers, polybutadiene rubbers, butyl rubber, bromobutyl rubber, cholorobutyl rubber, the neoprenes, ethylene propylene rubbers, nitrile elastomers, fluoroelastomers, high styrene butadiene copolymers, vinyl acetate ethylene copolymers, chlorinated polyethylene rubber, chlorosulfonated polyethylene elastomer, polyethylene, reclaimed rubber, and natural rubber. In one variation of the invention, the curable elastomer is a silicone elastomer. Examples of suitable silicone elastomers include HCR silicones such as the ELASTOSIL® R 401 family of elastomers commercially available from Wacker Silicones Division located in Adrian, Michigan. In a variation of the present invention, the curable elastomer is present in an amount from 50% to 99.8% of the combined weight of the curable elastomer, the metal salt of an ethylenically unsaturated carboxylic acid, the trifunctional acrylate, and the organic organic peroxide. In another variation of the present invention, the curable elastomer is present in an amount from 75% to 99.5% of the combined weight of the curable elastomer, the metal salt of an ethylenically unsaturated carboxylic acid, the trifunctional acrylate, and the organic organic peroxide. In yet another variation of the present invention, the curable elastomer is present in an amount from 90% to 99% of the combined weight of the curable elastomer, the metal salt of an ethylenically unsaturated carboxylic acid, the trifunctional acrylate, and the organic peroxide.

The elastomeric composition of the present invention also includes a metal salt of an ethylenically unsaturated carboxylic acid. Typically, this metal salt is the metal salt of an α, β - ethylenically unsaturated carboxylic acid (*i.e.*, the unsaturation is between the α and β carbons of the carboxylic acid. The metal component of these metal salts of an ethylenically unsaturated carboxylic acid include, for example, zinc, magnesium, sodium, potassium, calcium, barium, cobalt, copper, aluminum and iron. An example of such a carboxylic acid is acrylic acid. Examples of metal salts of an ethylenically unsaturated carboxylic acid based on acrylic acid include calcium diacrylate, magnesium diacrylate, zinc diacrylate, and combinations thereof. Preferably, the metal salt of an ethylenically unsaturated carboxylic acid comprises zinc diacrylate. Another example of a carboxylic acid from which the metal salt may be derived includes methacrylic acid. An example of a metal salt of an ethylenically unsaturated carboxylic acid based on acrylic acid is zinc dimethacrylate. In one Variation, the metal salt is present in an amount from 0.05% to 30% of the combined weight of the curable elastomer, the metal salt of an ethylenically unsaturated carboxylic acid, the trifunctional acrylate, and the organic peroxide. In another variation of the invention, the metal salt is present in an amount from 0.1% to 15% of the combined weight of the curable elastomer, the metal salt of an ethylenically unsaturated carboxylic acid, the trifunctional acrylate, and the organic peroxide. In yet another variation of the invention, the metal salt is present in an amount from 0.2% to 5% of the combined weight of the curable elastomer, the metal salt of an ethylenically unsaturated carboxylic acid, the trifunctional acrylate, and the organic peroxide. Zinc diacrylate is available from Sartomer as Sartomer® SR634.

The curable elastomer composition of the invention also includes a trifunctional acrylate monomer. In one variation, the trifunctional acrylate monomer comprises a trimethylolpropane triacrylate. The trimethylopropane triacrylate may be trimethylolpropane trimethacrylate, an ethoxylated trimethylolpropane triacrylate, a propoxylated trimethylolpropane triacrylate, and combinations thereof. Specific examples of the trifunction acrylate monomer include ethoxylated (15) trimethylolpropane triacrylate, ethoxylated (3) trimethylolpropane triacrylate, ethoxylated (3) trimethylolpropane triacrylate, ethoxylated (6) trimethylolpropane triacrylate, and ethoxylated (9) trimethylolpropane triacrylate, ethoxylated(20) trimethylolpropane triacrylate, propoxylated (3) trimethylolpropane triacrylate, a propoxylated (6) trimethylolpropane triacrylate, a trimethylolpropane triacrylate, and trimethylolpropane trimethacrylate.
Trimethylolpropane trimethacrylate is available form Sartomer Company, Inc. as Sartomer® SR350.

In another variation of the invention, the trifunctional acrylate monomer is selected from the group consisting of a propoxylated glyceryl triacrylate, a trimethylolpropane triacrylate, tris (2-hydroxy ethyl) isocyanurate triacrylate, tris (2-hydroxy ethyl) isocyanurate triacrylate, pentaerythritol triacrylate, and combinations thereof. Specific examples of the trifunctional acrylate in this embodiment include highly propoxylated (5.5) glyceryl triacrylates, low viscosity trimethylolpropane triacrylates, pentaerythritol triacrylate, propoxylated (3) glyceryl triacrylate, a propoxylated (3) glyceryl triacrylate, tris (2-hydroxy ethyl) isocyanurate triacrylate, tris (2-hydroxy ethyl) isocyanurate triacrylate, and combinations thereof.

In one variation of the invention, the trifunctional acrylate monomer is present in an amount from 0.05% to 10% of the combined weight of the curable elastomer, the metal salt of an ethylenically unsaturated carboxylic acid, the trifunctional acrylate, and the organic peroxide. In another variation of the invention, the trifunctional acrylate monomer is present in an amount from 0.1% to 5% of the combined weight of the curable elastomer, the metal salt of an ethylenically unsaturated carboxylic acid, the trifunctional acrylate, and the organic peroxide. In yet another variation of the invention, the trifunctional acrylate monomer is present in an amount from 0.2% to 2% of the combined weight of the curable elastomer, the metal salt of an ethylenically unsaturated carboxylic acid, the trifunctional acrylate, and the organic peroxide.

The curable elastomeric compositions of the invention also include an agent that forms free radicals to promote crosslinking. In a variation of the invention, the curable elastomeric compositions of the invention include an organic peroxide as the free radical forming agent. Suitable organic peroxides include acyl peroxides, e.g. dibenzoyl peroxide, bis(4-chlorobenzoyl) peroxide and bis(2,4-dichlorobenzoyl) peroxide; alkyl peroxides and aryl peroxides such as di-t-butyl peroxide and dicumyl peroxide; perketals such as 2,5-bis(t-butylperoxy)-2,5-dimethylhexane; peresters such as diacetylperoxydicarbonate, t-butylperbenzoate and t-butylperisononanoate, t-butyl-.beta.-hydroxyethyl peroxide; and azo compounds which form free radicals, such as azoisobutyronitrile. In one variation, the organic peroxide is present in an amount of 0.1% to 10% of the combined weight of the curable elastomer, the metal salt of an ethylenically unsaturated carboxylic acid. In another variation, the organic peroxide is present in an amount of 0.3% to 5% of the combined weight of the curable elastomer, the metal salt of an ethylenically unsaturated carboxylic acid. In yet another variation, the organic peroxide is present in an amount of 0.6% to 3% of the combined weight of the curable elastomer, the metal salt of an ethylenically unsaturated carboxylic acid.

The curable elastomeric composition of the present invention may also include one or more additives such as polydiorganosiloxane polymer fluids, UV stabilizers, flame retardants, fillers, antioxidants, antiozonants, plasticizers, mold release agents, tackifiers, anti-tack agents, dispersants, solvents, softening agents, and pigments. Additives are potentially important in establishing the long-term stability of the curable elastomeric compositions, chemical and impact resistance, and to modify physical properties such as viscosity. Suitable UV stabilizers include, but are not limited to, hindered amine light stabilizers ("HALS"). Examples of HALS include: Chimassorb® 944, Chimassorb® 994, Chimassorb® 905, Tinuvin® 770, Tinuvin® 992, Tinuvin® 622, Tinuvin® 144, and Spinuvex® A36 available from Geigy; and Cyasorb® UV 3346 and Cyasorb® UV 944 commercially available American Cyanamide. Particularly preferred UV stabilizers are Cytec® UV 3346 and Chemasorb® 944 (poly(N,N-bis(2,2,6,6-tetramethyl-4-piperidinyl)- 1,6-hexanediamine-co -2,4-dichloro-6-morpholino-1,3,5-triazine). The curable elastomeric compositions optionally include a flame retardant. Flame retardants include, for example, halogen-containing compounds, antimony oxides, or phosphorus compounds. Suitable flame retardants include, but are not limited to aluminum trihydrate, antimony oxide (Sb₂O₃), and decabromobiphenyl oxide ("decabrome"). Similarly, the curable elastomeric compositions may also include fillers such as long kaolin clay, calcium carbonate, titanium dioxide, talc, zirconium dioxide, zinc oxide, calcium silicate, aluminum silicate, calcium sulfate, alumina trihydrate, glass fibers, carbon fibers, montmorillonite clay, and mixtures thereof. These fillers allow the material properties of the curable elastomeric compositions to be adjusted. In a variation of the invention, such fillers are present in an amount of 0.1% to 70% of the total weight of the elastomeric composition. In another variation of the invention, such fillers are present in an amount of 0.1% to 30% of the total weight of the elastomeric composition.

The elastomeric composition may also include polydiorganosiloxane polymer fluids. Such polymers act to soften the elastomeric composition and/or reduce viscosity. Polydiorganosiloxane polymer fluids include unmodified silicones, linear and cyclic volatile silicones, alkyl/alkoxy modified silicones, phenyl modified silicones, aminofunctionalized silicones, polyglucoside silicones and polyether functionalized silicones. Examples include unmodified silicone fluid polymers such as dimethicone and dimethiconol available as X-345 and F-1006 from Wacker Silicones Division (Adrian, Mich.), SP 96® (20, 50-1000), Visasil®(5M-100M) and SF18(350) from Costec Inc. (Palatine, Ill.), Dow Corning® 200 and 225 fluids from Dow Corning Corporation (Midland, Mich.), DM 100-1000, AK 5-1MM, and Sentry Dimethicone NF from Whitco Corporation (Greenwich, Conn.). Representative linear and cyclic volatile silicones include cyclomethicone (>4) available as SF 1173, SF 1202 and SF 1204 from Costec Inc., Dow Corning® 244, 145, 344 and 345 fluids from Dow Corning Corporation and CM 040 from Wacker Silicone Corporation; Dimethicone SF96® (5) from Costec Inc. and DM 1 plus from Wacker Silicones Division; and hexamethyldisiloxane available as DM 0.65 from Wacker Silicones Division. Examples of alkyl/alkoxy modified silicones include lauryl dimethicone available as Dow Corning® Q2-5200 from Dow Corning Corp, LDM 3107VP from Wacker Silicones Corp.; cetyl dimethicone available as Dow Corning® 2502 from Dow Corning Corp. and DMC 3071 from Wacker Silicones Corp.; stearyl dimethicone available as SF1632 from Costec, Inc., Dow Corning® 2504 from Dow Corning Corp., and E32 from Wacker Silicones Division. An example of phenyl modified silicones are PDM 20, 100, 1000 from Wacker Silicones Division and phenyltrimeticone available as SF 1550 from Costec Inc., Dow Corning® 556 fluid from Dow Corning Corporation. Examples of aminofunctionalized silicones are amodimethicone available as L650, 652 and ADM 6057E from Wacker Silicones Division, SM2658 from Costec, Inc., Dow Corning® 929 and 939 from Dow Corning Corp.; and trimethylsilylamodimethicone available as L653, 655, 656 and ADM 3047E from Wacker Silicones Division SF1708-D1, SM2101 and SM2115-D2 from Costec, Inc., and Dow Corning® Q2-7224 and Q2-8220 from Dow Corning Corp. Octyl dimethicone ethoxy glucoside (SPG 128) is a silicone polyglucoside available from Wacker Silicones Division. Finally, examples of polyether functionalized silicones include cetyl dimethicone copolyol available as CMC 3071 from Wacker Silicones Division and dimethicone copolyol available as SF 1188 from Costec, Inc., and Dow Corning® 2501, 3225C, Q2-5324 and Q2-5434 from Dow Corning Corp.

The elastomeric composition of the invention may also include one or more pigments to achieve a desired color. Suitable pigments include the Silcogum® and Silcopas® families of color pigments available from Gayson Silicone Dispersions, Inc. located in Barberton, Ohio.

Finally, the curable elastomeric composition of the invention may also include additional inhibitor and stabilizer additives which serve to control the curing time. Examples of such inhibitors include acetylenic alcohols such as 1-ethynyl-1-cylcohexanol, 2-methyl-3-butyn-2-ol and 3,5-dimethyl-1-hexyn-3-ol, 3-methyl-1-dodecyn-3-ol, poly(methylvinylcyclosiloxanes), such as 1,3,5,7-tetravinyltetramethyltetracyclosiloxane, low molecular weight silicone oils containing methylvinylSio_{2/2} groups and/or R₂vinylSiO_{1/2} terminal groups such as divinyltetramethyldisiloxane, tetravinyldimethyldisiloxane, trialkylcyanurates, maleates such as diallyl maleate, dimethyl maleate and diethyl maleate, fumarates such as diallyl fumarate and diethyl fumarate, organic hydroperoxides such as cumene hydroperoxide, t-butyl hydroperoxide and pinane hydroperoxide, organic peroxides, organic sulfoxides, organic amines, diamines and amides, phosphanes and phosphites, nitrites, triazoles, diaziridines and oximes. In a variation of the invention, the elastomeric composition includes an inhibitor in amount from 0 to 50,000 ppm. In another variation, the elastomeric composition includes an inhibitor 20 to 5000 ppm. In yet another variation of the invention, the elastomeric composition includes an inhibitor in an amount from 200 to 2000 ppm.

In another embodiment of the invention, a method of coating an article with an elastomer is provided. The method of the invention comprises the curable elastomeric compositions set forth above to at least a portion of a surface of the article to form a uncured coated article. The uncured coated article is then cured to form a cured coated article. The curable elastomeric composition may be applied to a surface by a number of processes known to those skilled in the art of rubber and plastic coatings. A particularly useful process for applying the curable elastomeric composition is injection molding. Moreover, the method of the invention is particularly well suited for making insulators used to connect high voltage power lines to transmission pylons. In forming such insulators, the curable elastomeric composition of the invention is applied to a core insulator component (in the sense that a portion of the core insulator component is internal to a portion of the over-coated elastomer). Typically, the core insulator component is a fiberglass rod and the composition is applied by injection molding. End fittings that are used to connect the power lines to the transmission pylon and line are added prior to or after the elastomer is over-molded onto the fiberglass rod.

Curing of the compositions of the invention is effected by a method known to those skilled in the art by subjecting the compositions to a sufficiently high temperature and pressure for a sufficient time for curing to occur. In general, useful cure temperatures will be from 80° C to 280° C. More preferably, the cure temperature is from 100° C to 200° C. Typically, curing is completed in 1 to 40 minutes. More preferably, curing is completed in 5 to 15 minutes. Cure temperatures and pressures should be sufficient to melt or soften the reactants and to thermally decompose the free-radical generating compound.

The following examples illustrate the various embodiments of the present invention. Those skilled in the art will recognize many variations that are within the spirit of the present invention and scope of the claims.

Samples with the compositions set forth in Table 1 were prepared and tested for adhesiveness. Preparation of the samples was by either mixing in a kneader type mixer or on a 2-roll mill. Samples 3, 5, and 6 are comparative samples not containing the zinc diacrylate or the trimethylolpropane trimethacrylate. Each sample was prepared for testing by molding the sample over a substrate to create an adhesive peel sample similar to that described in ASTM D952. Substrates consisted of either pieces of zinc galvanized steel or glass fiber reinforced epoxy resin. The samples were then mechanically pulled apart from the substrate and the failure mode was evaluated. The failure mode was quantified as the amount of sample that remained on the substrate. This is also referred to as the amount of cohesive failure. A high value for the percentage of cohesive failure indicates that the samples adhered well to the substrate. Results are provided in Table 2. The samples of the present invention (samples 1,2, and 4) clearly show enhance adhesion to the substrates having 100% cohesive failure.

**Table 1. Sample compositions**

| **Component** | **Sample** | | | | | |
|---|---|---|---|---|---|---|
| | 1 | 2 | 3* | 4 | 5* | 6* |
| Fumed Silica Filled HCR base (Elastosil® R401 HCR base) | 100 parts | 100 parts | 100 parts | 100 parts | 100 parts | 100 parts |
| Organic peroxide (Varox® DBPH50) | 0.80 parts | 2.13 parts | 2.13 parts | 2 parts | 2 parts | 0.80 parts |
| Alumina trihydrate filler (Huber Micral® 632) | | 148 parts | 148 parts | 95 parts | 95 parts | |
| Siloxane softener fluid (Wacker® X-345) | | 3.45 parts | 3.45 parts | 3 parts | 3 parts | |
| Pigment dispersion in silicone gum (Silcogum Black 233) | | 1.69 parts | 1.69 parts | 1.80 parts | 1.80 parts | |
| Zinc Diacrylate (Sartomer® SR634) | 0.25 parts | 0.65 parts | | 0.50 parts | | |
| Trimethylolpropane trimethacrylate (Sartomer® SR350) | 0.25 parts | 0.65 parts | | 0.50 parts | | |
| Fumed silica (Wacker® HDK N20) | | 3.12 parts | 3.12 parts | | | |

| | | | | | | |
|---|---|---|---|---|---|---|
| * not according to the invention | | | | | | |

**Table 2. Results of adhesion testing**

| **COMPOUND** | **SUBSTRATE** | **FAILURE MODE** |
|---|---|---|
| 1 | Galvanized steel | 100% Cohesive |
| 2 | Galvanized steel | 100% Cohesive |
| 3* | Galvanized steel | 0% Cohesive |
| 6* | Galvanized steel | 0% Cohesive |
| 6* | Glass filled epoxy resin | 0% Cohesive |
| 4 | Glass filled epoxy resin | 100% Cohesive |
| 5* | Glass filled epoxy resin | 0% Cohesive |
| 1 | Glass filled epoxy resin | 100% Cohesive |
| 3* | Glass filled epoxy resin | 0% Cohesive |

| | | |
|---|---|---|
| *not according to the invention | | |

## Claims

1. A curable elastomeric composition comprising:
a curable elastomer;
a metal salt of an ethylenically unsaturated carboxylic acid;
a trifunctional acrylate monomer; and
an organic peroxide.

2. The curable elastomeric composition of claim 1 wherein the curable elestomer is selected from the group consisting of synthetic silicone elastomers, polyisoprene, styrenebutadiene rubbers, polybutadiene rubbers, butyl rubber, bromobutyl rubber, cholorobutyl rubber, the neoprenes, ethylene propylene rubbers, nitrile elastomers, fluoroelastomers, high styrene butadiene copolymers, vinyl acetate ethylene copolymers, chlorinated polyethylene rubber, chlorosulfonated polyethylene elastomer, polyethylene, reclaimed rubber, and natural rubber.

3. The curable elastomeric composition of claim 1 or 2 wherein the metal salt of an ethylenically unsaturated carboxylic acid is a metal salt of an α, β- ethylenically unsaturated carboxylic acid.

4. The curable elastomeric composition of claims 1 to 3 wherein the metal salt of an ethylenically unsaturated carboxylic acid is a metal salt of acrylic acid.

5. The curable elastomeric composition of claims 1 to 4 wherein the metal salt of an ethylenically unsaturated carboxylic acid is selected from the group consisting of calcium diacrylate, magnesium diacrylate, zinc diacrylate, and combinations thereof.

6. The curable elastomeric composition of claims 1 to 3 wherein the metal salt of an ethylenically unsaturated carboxylic acid is a metal salt of methacrylic acid.

7. The curable elastomeric composition of claims 1 to 3 wherein the metal salt of an ethylenically unsaturated carboxylic acid comprises zinc dimethacrylate.

8. The curable elastomer composition of claims 1 to 3 wherein the trifunctional acrylate monomer comprises a trimethylolpropane triacrylate.

9. The curable elastomeric composition of claims 1 to 3 wherein the trifunctional acrylate monomer is selected from the group consisting of an ethoxylated trimethylolpropane triacrylate, a propoxylated trimethylolpropane triacrylate, and combinations thereof.

10. The curable elastomeric composition of claims 1 to 3 wherein the trifunctional acrylate monomer comprises trimethylolpropane trimethacrylate.

11. The curable elastomer composition of claims 1 to 3 wherein the trifunctional acrylate monomer is selected from the group consisting of a propoxylated glyceryl triacrylate, a trimethylolpropane triacrylate, tris (2-hydroxy ethyl) isocyanurate triacrylate, tris (2-hydroxy ethyl) isocyanurate triacrylate, pentaerythritol triacrylate, and combinations thereof.

12. The curable elastomer composition of claims 1 to 11 wherein: the curable elastomer is present in an amount from 50% to 99.8% of the combined weight of the curable elastomer, the metal salt of an ethylenically unsaturated carboxylic acid, the trifunctional acrylate, and the organic organic peroxide;
the metal salt of an ethylenically unsaturated carboxylic acid is present in an amount from 0.05% to 30% of the combined weight of the curable elastomer, the metal salt of an ethylenically unsaturated carboxylic acid, the trifunctional acrylate, and the organic peroxide;
the trifunctional acrylate monomer is present in an amount from 0.05 to 10 % of the combined weight of the curable elastomer, the metal salt of an ethylenically unsaturated carboxylic acid, the trifunctional acrylate, and the organic organic peroxide; and
the organic peroxide is present in an amount from 0.1 to 10% of the combined weight of the curable elastomer, the metal salt of an ethylenically unsaturated carboxylic acid, the trifunctional acrylate, and the organic organic peroxide.

13. The curable elastomeric composition of claims 1 to 12 wherein the curable elastomer is a curable silicone elastomer.

14. An article coated with the curable elastomer composition of claims 1 to 12.

15. A cured elastomer made from the curable elastomer composition of claims 1 to 12.

16. A method of coating an article with an elastomer comprising applying the composition of claims 1 to 12 to the article.

17. A method of coating an article with an elastomer comprising:
a) applying a curable elastomeric composition to at least a portion of a surface of the article to form a uncured coated article, the curable elastomeric composition comprising:
a curable elastomer;
a metal salt of an ethylenically unsaturated carboxylic acid present;
a trifunctional acrylate monomer; and
an organic peroxide; and
b) curing the uncured coated article to form a cured coated article.

18. The method of claim 17 wherein the curable elastomeric composition is applied to the article by injection molding.

## Patentansprüche

1. Härtbare elastomere Zusammensetzung, umfassend:
ein härtbares Elastomer;
ein Metallsalz einer ethylenisch ungesättigten Carbonsäure;
ein trifunktionelles Acrtylatmonomer; und
ein organisches Peroxid.

2. Härtbare elastomere Zusammensetzung von Anspruch 1, wobei das härtbare Elastomer aus der Gruppe gewählt wird, die aus synthetischen Silikonelastomeren, Polyisopren, Styrolbutadienkautschuken, Polybutadienkautschuken, Butylkautschuk, Brombutylkautschuk, Chlorbutylkautschuk, den Neoprenen, Ethylenpropylenkautschuken, Nitrilelastomeren, Fluorelastomeren, Butadiencopolymeren mit hohem Styrolgehalt, Vinylacetat-Ethylen-Copolymeren, chloriertem Polyethylenkautschuk, chlorsulfoniertem Polyethylenelastomer, Polyethylen, regeneriertem Kautschuk und natürlichem Kautschuk besteht.

3. Härtbare elastomere Zusammensetzung von Anspruch 1 oder 2, wobei das Metallsalz von einer ethylenisch ungesättigten Carbonsäure ein Metallsalz einer α,β-ethylenisch ungesättigten Carbonsäure ist.

4. Härtbare elastomere Zusammensetzung der Ansprüche 1 bis 3, wobei das Metallsalz von einer ethylenisch ungesättigten Carbonsäure ein Metallsalz von Acrylsäure ist.

5. Härtbare elastomere Zusammensetzungen der Ansprüche 1 bis 4, wobei das Metallsalz von einer ethylenisch ungesättigten Carbonsäure aus der Gruppe gewählt wird, die aus Calciumdiacrylat, Magnesiumdiacrylat, Zinkdiacrylat und Kombinationen davon besteht.

6. Härtbare elastomere Zusammensetzung der Ansprüche 1 bis 3, wobei das Metallsalz von einer ethylenisch ungesättigten Carbonsäure ein Metallsalz von Methacrylsäure ist.

7. Härtbare elastomere Zusammensetzung der Ansprüche 1 bis 3, wobei das Metallsalz von einer ethylenisch ungesättigten Carbonsäure Zinkdimethacrylat umfasst.

8. Härtbare elastomere Zusammensetzung der Ansprüche 1 bis 3, wobei das trifunktionelle Acrylatmonomer ein Trimethylolpropantriacrylat umfasst.

9. Härtbare elastomere Zusammensetzung der Ansprüche 1 bis 3, wobei das trifunktionelle Acrylatmonomer aus der Gruppe gewählt ist, welche aus einem ethoxylierten Trimethylolpropantriacrylat, einem propoxylierten Trimethylolpropantriacrylat und Kombinationen davon besteht.

10. Härtbare elastomere Zusammensetzung gemäß Anspruch 1 bis 3, wobei das trifunktionelle Acrylatmonomer Trimethylolpropantriacrylat umfasst.

11. Härtbare elastomere Zusammensetzung der Ansprüche 1 bis 3, wobei das trifunktionelle Acrylatmonomer aus der Gruppe gewählt wird, die aus einem propoxylierten Glyceryltriacrylat, einem Trimethylolpropantriacrylat, Tris(2-hydroxyethyl)isocyanurattriacrylat, Tris(2-hydroxyethyl)isocyanurattriacrylat, Pentaerythritoltriacrylat und Kombinationen davon besteht.

12. Härtbare elastomere Zusammensetzung der Ansprüche 1 bis 11, wobei: das härtbare Elastomer in einer Menge von 50% bis 99,8% des zusammengefassten Gewichtes von dem härtbaren Elastomer, dem Metallsalz einer ethylenisch ungesättigten Carbonsäure, dem trifunktionellen Acrylat und dem organischen organischen Peroxid vorliegt;
das Metallsalz einer ethylenisch ungesättigten Carbonsäure in einer Menge von 0,05 bis 30% des zusammengefassten Gewichtes aus dem härtbaren Elastomer, dem Metallsalz einer ethylenisch ungesättigten Carbonsäure, dem trifunktionellen Acrylat und dem organischen organischen Peroxid vorliegt;
das trifunktionelle Acrylatmonomer in einer Menge von 0,05 bis 10% des zusammengefassten Gewichtes aus dem härtbaren Elastomer, dem Metallsalz einer ethylenisch ungesättigten Carbonsäure, dem trifunktionellen Acrylat und dem organischen Peroxid vorliegt; und
das organische Peroxid in einer Menge von 0,1 bis 10% des zusammengefassten Gewichtes von dem härtbaren Elastomer, dem Metallsalz einer ethylenisch ungesättigten Carbonsäure, dem trifunktionellen Acrylat und dem organischen organischen Peroxid vorliegt.

13. Härtbare elastomere Zusammensetzung der Ansprüche 1 bis 12, wobei das härtbare Elastomer ein härtbares Silikonelastomer ist.

14. Artikel, der mit der härtbaren Elastomerzusammensetzung der Ansprüche 1 bis 12 beschichtet ist.

15. Gehärtetes Elastomer, das aus der härtbaren Elastomerzusammensetzung der Ansprüche 1 bis 12 gemacht ist.

16. Verfahren zum Beschichten eines Artikels mit einem Elastomer, das das Auftragen der Zusammensetzung der Ansprüche 1 bis 12 auf den Artikel umfasst.

17. Verfahren zum Beschichten eines Artikels mit einem Elastomer, umfassend:
a) das Auftragen einer härtbaren elastomeren Zusammensetzung auf mindestens einen Teil einer Oberfläche des Artikels, um einen ungehärteten beschichteten Artikel zu bilden, wobei die härtbare elastomere Zusammensetzung folgendes umfasst:
ein härtbares Elastomer;
ein Metallsalz einer ethylenisch ungesättigten Carbonsäure;
ein trifunktionelles Acrtylatmonomer; und
ein organisches Peroxid; und
b) das Härten des ungehärteten beschichteten Artikels, um einen gehärteten beschichteten Artikel zu bilden.

18. Verfahren gemäß Anspruch 17, wobei die härtbare elastomere Zusammensetzung auf den Artikel mittels Spritzgießen aufgebracht wird.

## Revendications

1. Composition élastomère durcissable comprenant :
un élastomère durcissable ;
un sel métallique d'un acide carboxylique à insaturation éthylénique ;
un monomère acrylate trifonctionnel ; et
un peroxyde organique.

2. Composition élastomère durcissable selon la revendication 1 dans laquelle l'élastomère durcissable est choisi dans le groupe constitué par les élastomères de silicone synthétiques, le polyisoprène, les caoutchoucs styrène-butadiène, les caoutchoucs polybutadiène, le caoutchouc butyl, le caoutchouc bromobutyl, le caoutchouc cholorobutyl, les néoprènes, les caoutchoucs éthylène-propylène, les élastomères de nitrile, les fluoroélastomères, les hauts copolymères styrène-butadiène, les copolymères acétate de vinyle-éthylène, le caoutchouc polyéthylène chloré, l'élastomère de polyéthylène chlorosulfoné, le polyéthylène, le caoutchouc recyclé et le caoutchouc naturel.

3. Composition élastomère durcissable selon la revendication 1 ou 2 dans laquelle le sel métallique d'un acide carboxylique à insaturation éthylénique est un sel métallique d'un acide carboxylique à insaturation α,β-éthylénique.

4. Composition élastomère durcissable selon les revendications 1 à 3 dans laquelle le sel métallique d'un acide carboxylique à insaturation éthylénique est un sel métallique d'acide acrylique.

5. Composition élastomère durcissable selon les revendications 1 à 4 dans laquelle le sel métallique d'un acide carboxylique à insaturation éthylénique est choisi dans le groupe constitué par le diacrylate de calcium, le diacrylate de magnésium, le diacrylate de zinc, et leurs combinaisons.

6. Composition élastomère durcissable selon les revendications 1 à 3 dans laquelle le sel métallique d'un acide carboxylique à insaturation éthylénique est un sel métallique d'acide méthacrylique.

7. Composition élastomère durcissable selon les revendications 1 à 3 dans laquelle le sel métallique d'un acide carboxylique à insaturation éthylénique comprend du diméthacrylate de zinc.

8. Composition élastomère durcissable selon les revendications 1 à 3 dans laquelle le monomère acrylate trifonctionnel comprend du triacrylate de triméthylolpropane.

9. Composition élastomère durcissable selon les revendications 1 à 3 dans laquelle le monomère acrylate trifonctionnel est choisi dans le groupe constitué par un triacrylate de triméthylolpropane éthoxylé, un triacrylate de triméthylolpropane propoxylé, et leurs combinaisons.

10. Composition élastomère durcissable selon les revendications 1 à 3 dans laquelle le monomère acrylate trifonctionnel comprend du triméthacrylate de triméthylolpropane.

11. Composition élastomère durcissable selon les revendications 1 à 3 dans laquelle le monomère acrylate trifonctionnel est choisi dans le groupe constitué par un triacrylate de glycéryle propoxylé, un triacrylate de triméthylolpropane, le triacrylate d'isocyanurate de tris(2-hydroxyéthyle), le triacrylate de penta-érythritol, et leurs combinaisons.

12. Composition élastomère durcissable selon les revendications 1 à 11 dans laquelle: l'élastomère durcissable est présent en quantité de 50% à 99,8% du poids combiné de l'élastomère durcissable, du sel métallique d'un acide carboxylique à insaturation éthylénique, de l'acrylate trifonctionnel et du peroxyde organique ;
le sel métallique d'un acide carboxylique à insaturation éthylénique est présent en quantité de 0,05% à 30% du poids combiné de l'élastomère durcissable, du sel métallique d'un acide carboxylique à insaturation éthylénique, de l'acrylate trifonctionnel et du peroxyde organique ;
le monomère acrylate trifonctionnel est présent en quantité de 0,05 à 10% du poids combiné de l'élastomère durcissable, du sel métallique d'un acide carboxylique à insaturation éthylénique, de l'acrylate trifonctionnel et du peroxyde organique ; et
le peroxyde organique est présent en quantité de 0,1 à 10% du poids combiné de l'élastomère durcissable, du sel métallique d'un acide carboxylique à insaturation éthylénique, de l'acrylate trifonctionnel et du peroxyde organique.

13. Composition élastomère durcissable selon les revendications 1 à 12 dans laquelle l'élastomère durcissable est un élastomère de silicone durcissable.

14. Article revêtu de la composition élastomère durcissable selon les revendications 1 à 12.

15. Elastomère durci fait de la composition élastomère durcissable selon les revendications 1 à 12.

16. Procédé permettant de revêtir un article avec un élastomère, comprenant le fait d'appliquer sur l'article la composition selon les revendications 1 à 12.

17. Procédé permettant de revêtir un article avec un élastomère comprenant les étapes consistant à :
a) appliquer une composition élastomère durcissable sur au moins une partie d'une surface de l'article pour former un article revêtu non durci, la composition élastomère durcissable comprenant :
un élastomère durcissable ;
un sel métallique d'un acide carboxylique à insaturation éthylénique présent ;
un monomère acrylate trifonctionnel ; et
un peroxyde organique ; et
b) durcir l'article revêtu non durci pour former un article revêtu durci.

18. Procédé selon la revendication 17 dans lequel la composition élastomère durcissable est appliquée sur l'article par moulage par injection.
